# EUROPEAN PATENT APPLICATION

(11) **EP 3 306 895 A1**
(43) Date of publication of application: **11.04.2018**
(21) Application number: 16193094.6
(22) Date of filing: 10.10.2016
(51) Int. Cl.: H04L 29/08, H04L 12/28, H04L 29/06

(54) **METHODS AND DEVICES OF A BUILDING AUTOMATION SYSTEM**

(71) Applicant: ABB AB, 721 83 Västerås (SE)
(72) Inventor: PANG, Zhibo, 722 42 Västerås (SE); BAG, Gargi, 723 44 Västerås (SE); SCHMITT, Johannes, 68526 Ladenburg (DE)
(74) Representative: Jin, Xiao-Hong

(57) **Abstract**

The present disclosure relates to a method performed in a Building Automation (BA) system 1. The method comprises obtaining an indication of the existence of a user 4 of the BA system. The method also comprises determining that the user belongs to a Special Group of Users, SGU. The method also comprises associating the user with an operating mode of the BA system predefined for the SGU. The operating mode comprises device profiles for a plurality of field devices 5 comprised in the BA system. The device profile for each of the plurality of field devices defining which functionalities of the field device are enabled in the operating mode with which the user is associated. The method also comprises configuring the plurality of field devices in accordance with the respective device profiles of the operating mode. The method also comprises providing the user with the enabled functionalities by means of the plurality of field devices.

## Description

### TECHNICAL FIELD

The present disclosure relates to methods and devices of a Building Automation (BA) system.

### BACKGROUND

Building/home automation (BA/HA) devices are intended to improve energy efficiency, provide comfort and security to the residents. Emerging wireless Internet of Things (IoT) standards such as Internet Engineering Task Force (IETF) IoT and Thread are considered to play a major role in next generation BA devices. Wireless technologies have advantages over the wired counterpart in terms of ease and cost of installation and retrofit. An example of paired wireless devices in BA are a lighting device (lamp) and a corresponding switching device for turning the lamp on or off.

Today, typical BA devices provide no means to adapt their behaviour depending on the user. Some other devices are designed for a special use case, e.g. for elderly persons but not able to adapt their behaviour to others. Some advanced devices, like control panels, have mechanisms were some functionalities can be limited to certain users, however this is usually done based on a proprietary/manual setup on the device itself.

### SUMMARY

In BA, the users have to interact with ever more intelligent devices. In order to reduce the complexity, the interaction may be adapted to different kinds of users, e.g. reflecting their abilities, rights and tasks. These aspects can be described by roles or profiles, e.g. profiles for children, guests and aging population. In general, the present invention adapts the interaction between the user and the device according to the user role or profile.

For example, BA profiles for elderly persons may be used. The aging of the population is a mega trend and include challenges are faced also in BA industry (including commercial buildings and residential buildings). The latest BA technologies are expected to make the life of the elderlies easier. However, there is a lack of consideration in the product design, especially for safety. Different kinds of user groups may be characterized by their abilities such as mobility, pro-action, reaction, hearing, sight, cognition, etc. Situations worsen if they are suffering from some chronic disease. So the elderly users have difficulties to properly use the BA devices which are normally designed for users without the limited function of the elderly user. In some extreme cases, miss-operations might even cause safety issues even though the devices have been certified according to relevant safety regulations. The situation becomes even worse when the operation of BA devices are more and more complicated due to enriched functionalities. For example, if the target temperature of HVAC (heating, ventilation, air conditioning) is set to the highest limit or lowest limit by mistake during the night, it may be bad for the health of the elderly user if the user has e.g. a cardiovascular disease.

In addition to the elderly users, the safety concerns are also applicable to other Special Group of Users (SGUs) such as children, disabled persons, pregnant women, and medical patients. Many appliances, devices and even on-wall outlets have such usability issues for different SGUs. On the other hand, totally disabling these BA devices or avoiding their use may not be the preferred solution to the problem.

The inventors have thus identified a need for a solution to allow simplified operation by different SGUs and for caregivers of users in some SGUs to more flexibly reconfigure the BA devices into some kind of SGU-friendly mode. The reconfiguration may be safe enough itself so that it may not be triggered by mistake. The reconfiguration may preferably be flexible enough so that it can be performed often to reflect the fact that the functional situation of users of SGUs may change over time.

According to an aspect of the present invention, there is provided a method performed in a Building Automation (BA) system. The method comprises obtaining an indication of the existence of a user of the BA system. The method also comprises determining that the user belongs to a Special Group of Users, SGU. The method also comprises associating the user with an operating mode of the BA system predefined for the SGU. The operating mode comprises device profiles for a plurality of field devices comprised in the BA system. The device profile for each of the plurality of field devices defining which functionalities of the field device are enabled in the operating mode with which the user is associated. The method also comprises configuring the plurality of field devices in accordance with the respective device profiles of the operating mode. The method also comprises providing the user with the enabled functionalities by means of the plurality of field devices.

According to another aspect of the present invention, there is provided a computer program product comprising computer-executable components for causing a BA system to perform an embodiment of a method of the present disclosure when the computer-executable components are run on processing circuitry comprised in the BA system.

According to another aspect of the present invention, there is provided a BA system comprising processing circuitry, and storage storing instructions executable by said processing circuitry whereby said BA system is operative to obtain an indication of the existence of a user of the BA system. The BA system is also operative to determine that the user belongs to an SGU. The BA system is also operative to associate the user with an operating mode of the BA system predefined for the SGU, the operating mode comprising device profiles for a plurality of field devices comprised in the BA system, the device profile for each of the plurality of field devices defining which functionalities of the field device are enabled in the operating mode with which the user is associated. The BA system is also operative to configure the plurality of field devices in accordance with the respective device profiles of the operating mode. The BA system is also operative to provide the user with the enabled functionalities by means of the plurality of field devices.

According to another aspect of the present invention, there is provided a method performed by a configuration tool of a BA system. The method comprises obtaining information about a plurality of field devices in the BA system. The method also comprises obtaining information about a user of the plurality of field devices. The method also comprises associating the user with a predefined operating mode of the BA system, the operating mode comprising respective device profiles for each of the plurality of field devices, the device profile for each of the plurality of field devices defining which functionalities of the field device are enabled in the operating mode with which the user is associated. The method also comprises, to each of the plurality of field devices, sending information about its respective device profile.

According to another aspect of the present invention, there is provided a computer program product comprising computer-executable components for causing a configuration tool to perform an embodiment of a method of the present disclosure when the computer-executable components are run on processing circuitry comprised in the configuration tool.

According to another aspect of the present invention, there is provided a configuration tool for a BA system. The configuration tool comprises processing circuitry, and storage storing instructions executable by said processing circuitry whereby said configuration tool is operative to obtain information about a plurality of field devices in the BA system. The configuration tool is also operative to obtain information about a user of the plurality of field devices. The configuration tool is also operative to associate the user with a predefined operating mode of the BA system, the operating mode comprising respective device profiles for each of the plurality of field devices, the device profile for each of the plurality of field devices defining which functionalities of the field device are enabled in the operating mode with which the user is associated. The configuration tool is also operative to, to each of the plurality of field devices, send information about its respective device profile.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic illustration of an embodiment of a BA system in accordance with the present invention.
Fig 2 is a schematic signalling diagram of a configuration phase in an embodiment of a BA system, in accordance with the present invention.
Fig 3 is a schematic signalling diagram of an operation phase in an embodiment of a BA system, in accordance with the present invention.
Fig 4 is a schematic flow chart of an embodiment of a method of the present invention.
Fig 5 is a schematic flow chart of an embodiment of a method performed in the configuration tool, of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

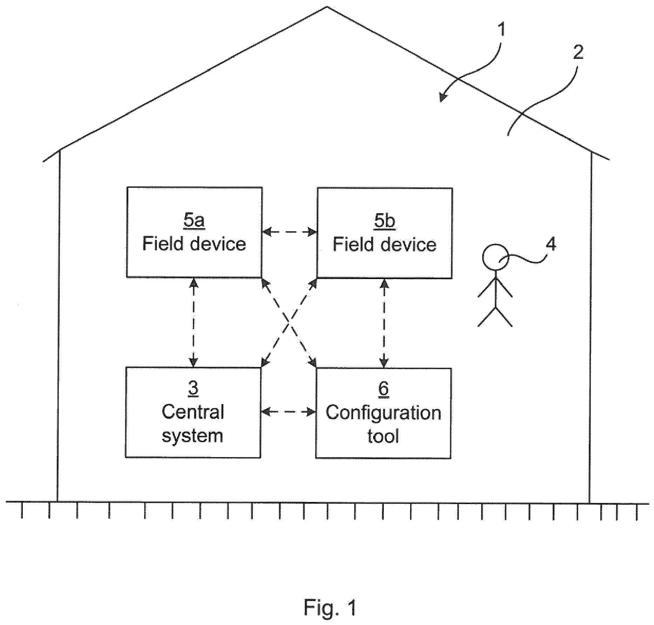

Figure 1 illustrates an embodiment of a BA system 1 in a building 2. The BA system 1 comprises a plurality of BA devices in the form of field devices 5 (herein only two field devices 5a and 5b are shown as an example, but any number is possible), a central system 3 and a configuration tool 6 which is used when configuring the BA system. The different BA devices are able to communicate with each other, as indicated by the dashed double-headed arrows, typically wirelessly over a radio interface in a Local Area Network (LAN) but in some cases also wired communication may be possible or communication via a Packet Data Network (PDN) such as the Internet. The central system 3 and/or the configuration tool may e.g. be remotely located (not in the building 2, and communicate with the field devices via a PDN. All field devices 5 may not be able to communicate with each other, but only field devices which are paired with each other, such as field devices 5a and 5b (e.g. a lamp and its corresponding light switch, or an air conditioning (AC) unit and its corresponding control). A user 4 may interact with some of the field devices 5 (e.g. light switch or AC control, and thus also indirectly with other field devices (e.g. lamp or AC unit, via the light switch and AC control).

The configuration tool 6 is used for configuration the assignments of users to SGUs and of SGUs to device functionalities. The configuration tool 6 may e.g. be a dedicated professional device, or a smartphone, computer or cloud server running adequate software, locally or remotely.

The field devices 5 may be any building automation device installed in the field, e.g. a control panel for an air conditioner, a wall mounted electricity socket, etc.

The central system 3 is an element providing information about the assignments to other parts of the building automation system 1, especially to its field devices 5. The central system 3 may e.g. be a computer running adequate software in the LAN or remotely in via the Internet.

Each of the BA devices 3, 4 and 5 comprises processing means, a storage for storing software to be executed by means of the processing means, and a communication interface for communicating with other devices in the BA system 1.

In accordance with the present invention, the user 4 may belong to an SGU for which the BA system 1 has a predefined operation mode in which parameters of the field devices 5 are adjusted to suit the users of the SGU. SGU operation modes may comprise adjustable parameters such as, but not limited to, the following:
- Disable the wall-mounted electricity socket (i.e. no power output from it), or allow it to be enabled only for a maximum amount of time.
- Set a highest temperature of the air conditioner allowed, e.g. to 23 degree Celsius.
- Set a lowest temperature of the air conditioner allowed. e.g. to 18 degree Celsius.
- Set a night lamp always on, or off, or on for a maximum amount of time.
- Set the door lock always on, or off, or on for a maximum amount of time.
- Set the faucet always on, or off, or on for a maximum amount of time.
- Set a security video surveillance camera always on, or off, or on for a maximum amount of time.
- Set the oven, stove, microwave oven, coffee pot, washing machine, and/or dish washer always off, or on for a maximum amount of time
- Set a cabinet for dangerous tools like knives always to locked, or open for a maximum amount of time.

The above are some examples of limitations to the control of the BA system 1 which may be set for an SGU e.g. of persons suffering from dementia.

The involved devices 3-4 each exposes a machine readable description of their functionalities (e.g. methods, parameters,... ) as the so-called Supported Device Profiles. These description elements might include any of:
a) Proprietary (i.e. each device defines its own set of methods and parameters).
b) Based (or mapped) on standards describing functions in building automation - like VDI3813 or other middleware technologies like AllJoyn, IoTivity or HomeKit. This simplifies the configuration or enables the automatic assignment of SGUs to functionalities based on a common understanding/definition.

Each field device 5 may be configured to serve any of:
a) One SGU - In this case the behaviour of the device 5 is not changed depending on the current user. This may be used e.g. in scenarios where the SGU typically does not change, e.g. in the home of an elderly person.
b) Multiple SGUs - In case of multiple SGUs the concept requires an authentication/authorization step in the beginning when the interaction between the user 4 and the BA system 1 is started. This may be done using a user identification mechanism, e.g. a Bluetooth beacon, a fingerprint sensor, a code, a badge, or a Radio-Frequency Identification (RFID) tag. The interaction of each device 5 with the user 4 is then to be in accordance with the predefined operating mode for the SGU with the identified user has been assigned. The central system 3 informs the field devices 5 about the operating mode to be used for the identified user.

The assignment of device 5 functions in the operating modes for different SGUs defines which functions of a device 5 are enabled, and to what degree, for which SGU. These assignments are registered as operating modes in the central system 3 in order to provide and re-use the same settings for all devices 5 within the whole building automation system 1, or for the devices 5 in an area, e.g. room or apartment, of the identified user 4. The assignments may be done e.g.:
a) "On the fly" - by a field device 5 requesting information from the central system 3 in the moment of the user's 4 interaction with the field device 5.
b) Downloaded to the field device 5. In this case, the assignment is downloaded to the device 5, e.g. when the assignment changes and before the interaction of the user 4 with a field device 5 takes place.

Embodiments of the present invention may be integrated into the BA system 1 in different lifecycle phases of the BA system, e.g.:
1) The BA system 1 may make use of common definitions (which might be part of system development/standardization activity) for SGUs or the BA system 1 may define own SGUs that may be defined/modified during configuration of the BA system.
2) The description elements of each field device 5 may be defined during development of the device 5 or the BA system 1.
3) During the installation of the BA system 1 (e.g. in the engineering or configuration of the building automation system) the exposed description elements of the devices 5 may be collected e.g. from the devices or other sources like device catalogues.
4) During the configuration or re-configuration of the BA system 1 the functionalities of the field devices 5 (as provided by the description elements) may be assigned to SGUs. The assignments may enable or disable certain functionalities, limit their operation or make other adaptations that influences the interaction with the user 4 during runtime, as per the predefined operating mode for the SGU.
5) During operation when a user 4 interaction with a field device 5 takes place, for instance:
   a) If multiple users 4 are served by the BA system 1, the ID of the user may be required as input. This may be provided by another, e.g. an external, system component. The user's ID may be mapped to an SGU by the central system 3.
   b) The SGU of the user 4 may be used to determine the assigned/enabled device functionalities in accordance with the predetermined operating mode associated with the SGU. This may be done within the field device 5 (in case the assignments have been downloaded from the central system 3 to the field device 5) or by requesting information from the central system 3 (in case assignments are done "on the fly").
   c) The field device 5 may adapt its behaviour (incl. the interaction with the user 4) according the SGU of the user 4.

The mechanisms of the central system 3 may in some embodiments be integrated within a building automation controller that is used also for other functions within the BA system 1, like running control logic, scheduling, (remote) monitoring, and remote access. The assignment of SGUs towards field device functionalities may be part of a larger (data or information) model that is used also for other aspects like device integration, rights management, building information modelling, etc.

By means of embodiments of the present invention, an operator of the BA system 1, e.g. a caregiver or medical professional, may easily configure the BA system for a person/patient by assigning an SGU for the person/patient, e.g. by selecting an SGU and thus an operating mode from a list for instance via a Graphical User Interface (GUI) on a smartphone or tablet or the like which may e.g. act as a configuration tool 6 as discussed herein.

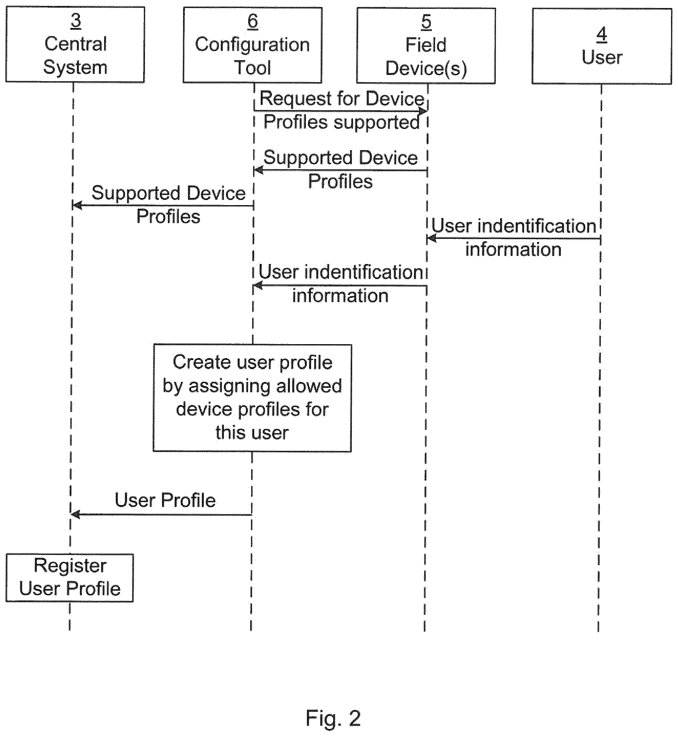

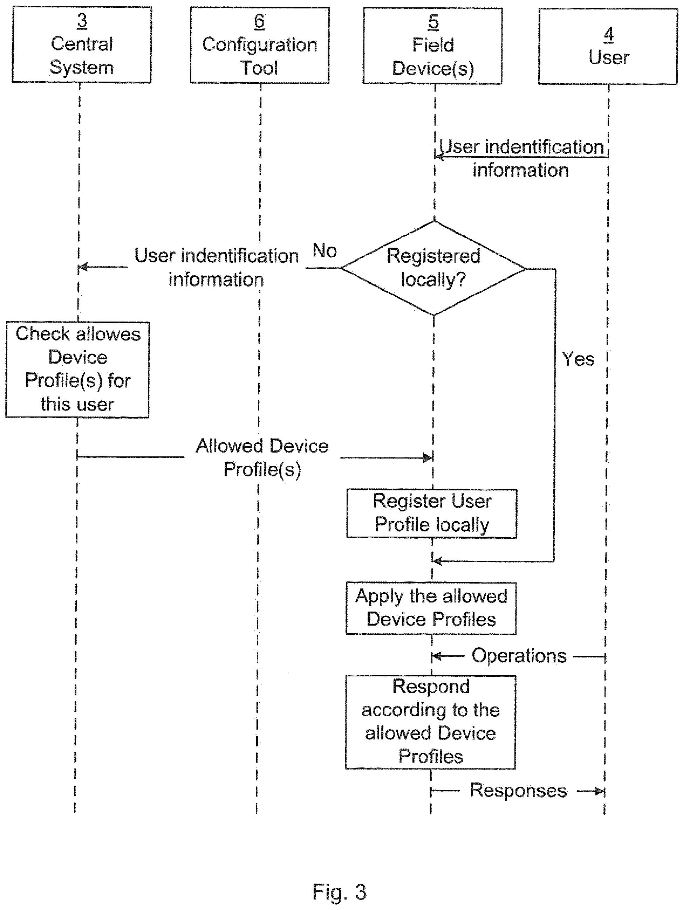

Some main features of some embodiments of the present invention during a configuration phase and an operation phase of the BA system 1 are illustrated in figures 2 and 3, respectively.

Figure 2 shows a signalling diagram of an example embodiment of how a BA system 1 may be configured by means of a configuration tool 6, e.g. operated by an operator, e.g. caregiver or medical professional, of the BA system. The configuration tool requests, and receives, from each field device(s) 5, the profiles supported by said field device, and informs the central system 3 thereof. The configuration tool may also receive user identification information from the user 4, e.g. by means of a fingerprint or other biometrics, or by means of a tag or the like worn by the user and identifying the user 4, via a field device 5. The configuration tool 6 may then, automatically or via an operator user interface, create a user profile for the user 4 by assigning the allowed device profiles for this user in accordance with the predefined operating mode of the SGU the user is chosen to belong to. The user profile is then saved and registered in the central system 3.

Figure 3 shows a signalling diagram of an example embodiment of how a BA system 1 may operate after it has been configured with a registration of a user profile for a user 4, e.g. as discussed with reference to figure 2. The configuration tool 6 is then no longer needed and the BA system may operate automatically. A field device 5 detects the user 4, e.g. by user identification information as mentioned in respect of figure 2. The field device 5 may check whether the user is registered locally with said field device. If not, the user identification information is forwarded to the central system 3 where it is checked whether the user is registered centrally with a user profile in the central system. By the centrally registered user profile, it is determined which SGU the user 4 belongs to and thus which operating mode should be used for the BA system 1 and thus which device profiles (device functionalities) are allowed for the field device(s) 5 for this user. The allowed device profiles are sent to the relevant field devices 5, which may then register the user locally, allowing the field devices to enable the allowed functionalities and, from now on, service the user with said functionalities without requesting information from the central system 3. After the user has been registered locally with the relevant field device(s) 5, the respective allowed device profiles are applied, enabling the field devices to provide the allowed functionalities to the user 4. Thus, when the user interacts with any of the thus configured field device(s), said field device can respond in accordance with the device profiles of the operating mode for the SGU the user belongs to.

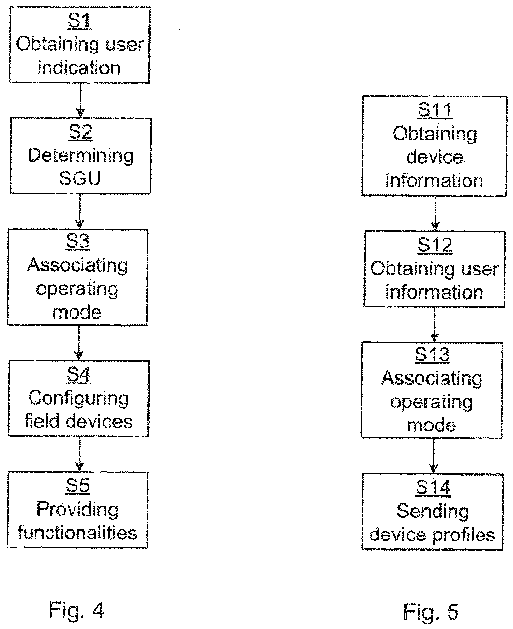

Figure 4 is a schematic flow chart of an embodiment of the method of the present invention. The method is performed in a BA system 1 as discussed herein. An indication of the existence of a human user 4 of the BA system is obtained S1. The indication may e.g. be user identification information as mentioned in figures 2 and 3. In some embodiments, the user is already registered in the BA system 1, locally in a field device 5 and/or centrally in a central system 3, in which case the obtaining S1 the indication may comprise a user 4 which is already registered with the BA system 1 being identified by the BA system.

Then, it is determined S2 which SGU the user 4 belongs to. This may e.g. be done in a configuration tool 6, for instance by means of interaction with a human operator via a user interface of the configuration tool. Alternatively, the determining S2 may be done in the central system 3 of the BA system 1, optionally including interaction with a human operator via a user interface of the central system.

When it has been determined S2 which SGU the user belongs to, the user is associated S3 with an operating mode of the BA system, which operating mode is predefined for the SGU. The operating mode comprises device profiles for a plurality of field devices 5 comprised in the BA system. The device profile for each of the plurality of field devices defines which functionalities of the field device are allowed and to be enabled in the operating mode with which the user is associated. If the user has not already been registered in the BA system, the associating S3 may also comprise registering the user 4 in the BA system 1, e.g. in the central system 3. Thus, at least a part of the associating S3 may be performed by a central system 3 in the BA system.

Then, the plurality of field devices 5 are each configured S4 in accordance with its respective device profile in accordance with the operating mode. The configuring S4 may correspond with the local registration of the user profile and/or the application of the allowed device profiles as discussed in relation with figure 3. The field device(s) 5 can then provide S5 the user with the enabled functionalities.

Figure 5 is a schematic flow chart of an embodiment of the method performed in the configuration tool 6. Information about a plurality of field devices 5 in the BA system is obtained S11. This information may e.g. be or comprise the supported device profiles as discussed with reference to figure 2.

Before, concurrently with, or after the obtaining S11 of device information, information about a user 4 of the plurality of field devices is obtained S12. This information may e.g. be or comprise the user identification information discussed with reference to figure 2.

Then, the user is associated S13 with a predefined operating mode of the BA system 1. The operating mode comprises respective device profiles for each of the plurality of field devices 5. The device profile for each of the plurality of field devices defining which functionalities of the field device are enabled in the operating mode with which the user is associated.

Then, to each of the plurality of field devices, information about its respective device profile is sent S14. By the sent information, the field devices 5 are informed about what functionalities are allowed to be provided to the user 4, whereby the devices 5 may enable these functionalities in accordance with the operating mode.

Embodiments of the present invention may be conveniently implemented in the BA system 1, e.g. in the configuration tool and/or elsewhere in the BA system such as in the field devices 5 and/or in the central system 3, using one or more conventional general purpose or specialized digital computer, computing device, machine, or microprocessor, including one or more processors, memory and/or computer readable storage media programmed according to the teachings of the present disclosure. Appropriate software coding can readily be prepared by skilled programmers based on the teachings of the present disclosure, as will be apparent to those skilled in the software art.

In some embodiments, the present invention includes a computer program product which is a non-transitory storage medium or computer readable medium (media) having instructions stored thereon/in which can be used to program a computer to perform any of the methods/processes of the present invention. Examples of the storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method performed in a Building Automation, BA, system (1), the method comprising:
obtaining (S1) an indication of the existence of a user (4) of the BA system;
determining (S2) that the user belongs to a Special Group of Users, SGU;
associating (S3) the user with an operating mode of the BA system predefined for the SGU, the operating mode comprising device profiles for a plurality of field devices (5) comprised in the BA system, the device profile for each of the plurality of field devices defining which functionalities of the field device are enabled in the operating mode with which the user is associated;
configuring (S4) the plurality of field devices in accordance with the respective device profiles of the operating mode; and
providing (S5) the user with the enabled functionalities by means of the plurality of field devices.

2. The method of claim1, wherein the determining (S2) is done in a configuration tool (6) of the BA system, said configuration tool being able to communicate with the plurality of field devices (5).

3. The method of claim 2, wherein the determining (S2) comprises interaction with an operator of the configuration tool (6) via a user interface of the configuration tool.

4. The method of any preceding claim, wherein the associating (S3) comprises registering the user (4) in the BA system (1).

5. The method of claim 1, wherein the obtaining (S1) an indication comprises identifying a user (4) which is already registered in the BA system (1).

6. The method of any preceding claim, wherein at least a part of the determining (S2) and/or the associating (S3) is performed by a central system (3) in the BA system (1).

7. A computer program product comprising computer-executable components for causing a BA system (1) to perform the method of any one of claims 1-6 when the computer-executable components are run on processing circuitry comprised in the BA system.

8. A Building Automation, BA, system (1), comprising:
processing circuitry; and
storage storing instructions executable by said processing circuitry whereby said BA system is operative to:
obtain an indication of the existence of a user (4) of the BA system;
determine that the user belongs to a Special Group of Users, SGU;
associate the user with an operating mode of the BA system predefined for the SGU, the operating mode comprising device profiles for a plurality of field devices (5) comprised in the BA system, the device profile for each of the plurality of field devices defining which functionalities of the field device are enabled in the operating mode with which the user is associated;
configure the plurality of field devices in accordance with the respective device profiles of the operating mode; and
provide the user with the enabled functionalities by means of the plurality of field devices.

9. A method performed by a configuration tool (6) of a Building Automation, BA, system (1), the method comprising:
obtaining (S11) information about a plurality of field devices (5) in the BA system;
obtaining (S12) information about a user (4) of the plurality of field devices;
associating (S13) the user with a predefined operating mode of the BA system, the operating mode comprising respective device profiles for each of the plurality of field devices (5), the device profile for each of the plurality of field devices defining which functionalities of the field device are enabled in the operating mode with which the user is associated; and
to each of the plurality of field devices, sending (S14) information about its respective device profile.

10. The method of claim 9, wherein the associating (S13) comprises interaction with an operator of the configuration tool (6) via a user interface of the configuration tool.

11. A computer program product comprising computer-executable components for causing a configuration tool (6) to perform the method of claim 9 or 10 when the computer-executable components are run on processing circuitry comprised in the configuration tool.

12. A configuration tool (6) for a Building Automation, BA, system (1), the configuration tool comprising:
processing circuitry; and
storage storing instructions executable by said processing circuitry whereby said configuration tool is operative to:
obtain information about a plurality of field devices (5) in the BA system;
obtain information about a user (4) of the plurality of field devices;
associate the user with a predefined operating mode of the BA system, the operating mode comprising respective device profiles for each of the plurality of field devices (5), the device profile for each of the plurality of field devices defining which functionalities of the field device are enabled in the operating mode with which the user is associated; and
to each of the plurality of field devices, send information about its respective device profile.
